# EUROPÄISCHE PATENTSCHRIFT

(11) **EP 0 881 462 B1**
(45) Veröffentlichungstag und Bekanntmachung des Hinweises auf die Patenterteilung: **23.07.2003**
(21) Anmeldenummer: 98109441.0
(22) Anmeldetag: 25.05.1998
(51) Int. Cl.: G01C 15/00, E04F 21/26, E04F 11/16, G01B 11/00

(54) **Vorrichtung zum Vermessen von Treppenflächen**
Stair-tread area measuring device
Dispositif pour mesurer la largeur des marches d'escalier

(30) Priorität: 26.05.1997 DE 29709164 U
(43) Veröffentlichungstag der Anmeldung: 02.12.1998
(73) Patentinhaber: Bierwirth, Horst, 34326 Morschen (DE)
(72) Erfinder: Bierwirth, Horst, 34326 Morschen (DE)
(74) Vertreter: Freiherr von Schorlemer, Reinfried, Dipl.-Phys.

(56) Entgegenhaltungen:
- DE-U- 9 317 691
- FR-A- 2 483 495

## Beschreibung

Die Erfindung betrifft eine Vorrichtung zum Vermessen von Treppenflächen.

Bei der Altbausanierung werden häufig Treppen vorgefunden, deren Trittstufen so stark abgenutzt sind, so daß sie erneuert werden müssen. Zur Erleichterung derartiger Erncuerungsarbeiten ist es bekannt, winkelförmige Profile zu verwenden, die wenigstens einen ersten, an die alte Setzstufe anzulegenden und als Richtmaß dienenden Schenkel und einen dazu senkrechten zweiten, auf die alte Trittstufe aufzulegenden und als Unterlage für eine neue Trittstufe dienenden Schenkel aufweisen. Dabei wird davon ausgegangen, daß die Setzstufen in der Regel auch bei einer zu sanierenden Treppe noch in Ordnung und an der richtigen Position angeordnet sind, so daß bei geeignet gewählter relativer Anordnung der beiden Schenkel zueinander der zweite Schenkel für den Fall, daß der erste Schenkel an der Setzstufe anliegt, automatisch die richtige Lage für die Vorderkante der neuen Trittstufe festlegt. Etwaige Zwischenräume zwischen den Profilen und den alten Treppenstufen werden mit einem Polyurethanschaum od. dgl. ausgefüllt (DE 77 34 902 U1, DE 85 04 095 U1, DE 86 04 260 U1, DE 87 13 770 U1).

Ein Problem bei der Anwendung derartiger Verfahren besteht darin, daß alle vorhandenen Trittstufen genau vermessen werden müssen, um die neu zu verlegenden Trittstufen oder, wenn diese aus mehreren Teilen zusammengesetzt werden sollen, die einzelnen Trittstufenteile so vorbereiten zu können, daß sie an der Baustelle nur noch eingebaut werden brauchen. Bisher müssen derartige Vermessungen mühsam und mit üblichen Längenmeßgeräten wie z.B. zusammenklappbaren oder aufrollbaren Meßstäben erfolgen, was angesichts des Umstands, daß die Vorderkanten der zu sanierenden Trittstufen meistens am stärksten abgenutzt sind und daher für die Messungen nicht zur Verfügung stehen, mit einem hohen Arbeits- und daher auch Kostenaufwand verbunden ist. Das gilt insbesondere dann, wenn es sich um Trittflächen handelt, die eine von der üblichen Rechteckform abweichende Oberfläche aufweisen.

Der Erfindung liegt daher die Aufgabe zugrunde, eine Vorrichtung zur Vermessung von Treppenflächen zu schaffen, die den dazu erforderlichen Arbeitsaufwand wesentlich reduziert, einfach gehandhabt werden kann und präzise Meßwerte liefert.

Zur Lösung dieser Aufgabe dienen die kennzeichnenden Merkmale des Anspruchs 1.

Die Erfindung geht von dem Gedanken aus, die Größe einer Trittstufenfläche dadurch zu ermitteln, daß die Abstände gemessen werden, die definierte Raumpunkte von denjenigen Endkanten der Trittstufenflächen haben, die durch die Setzstufen der jeweils nächsten Treppenstufen und die üblichen seitlichen Begrenzungen einer Treppe, z.B. eine Wand, eine Treppenwange od. dgl. begrenzt sind. Dadurch wird es möglich, nicht nur die Messung selbst, sondern auch die Herstellung der benötigten neuen Trittstufen bzw. Trittstufenteile beim Hersteller zu vereinfachen, da die erhaltenen und z.B. in digitaler Form abgespeicherten Daten lediglich in zur Herstellung von Trittstufen bzw. Trittstufenteilen geeignete Automaten eingegeben werden brauchen, die bisher nur zur Herstellung von Trittstufen für neu zu errichtende Treppen verwendet werden.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 eine schematische Anordnung einer erfindungsgemäßen Vorrichtung bei der Vermessung einer Treppe in perspektivischer Darstellung;
Fig. 2 eine Seitenansicht der Vorrichtung nach Fig. 1 beim Vermessen einer Trittstufenfläche in stark vergrößertem Maßstab;
Fig. 3 eine perspektivische Ansicht der erfindungsgemäßen Vorrichtung nach Fig. 2;
Fig. 4 eine perspektivische Ansicht der Vorrichtung nach Fig. 3, jedoch in einem teilweise auseinandergezogenen Zustand;
Fig. 5 die Vorderansicht eines Grundgestells der Vorrichtung nach Fig. 3;
Fig. 6 schematisch die Wirkungsweise eines Lasermeßgeräts der Vorrichtung nach Fig. 3;
Fig. 7 eine schematische Darstellung einer im Grundgestell der Vorrichtung nach Fig. 3 untergebrachten Steuereinheit;
Fig. 8 ein Fließbild für das mit der Steuereinheit nach Fig. 7 durchführbare Ablaufprogramm bei Anwendung der Vorrichtung nach Fig. 1 bzw. 3; und
Fig. 9 bis 11 schematisch die einzelnen Schritte bei der Vermessung einer Trittstufenfläche.

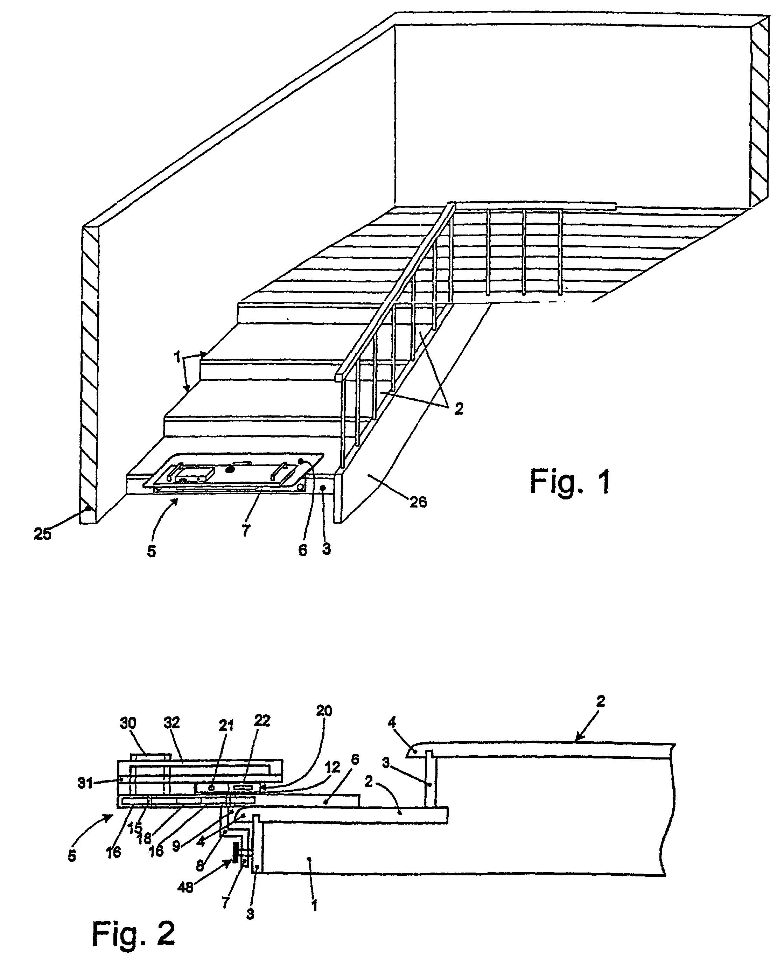

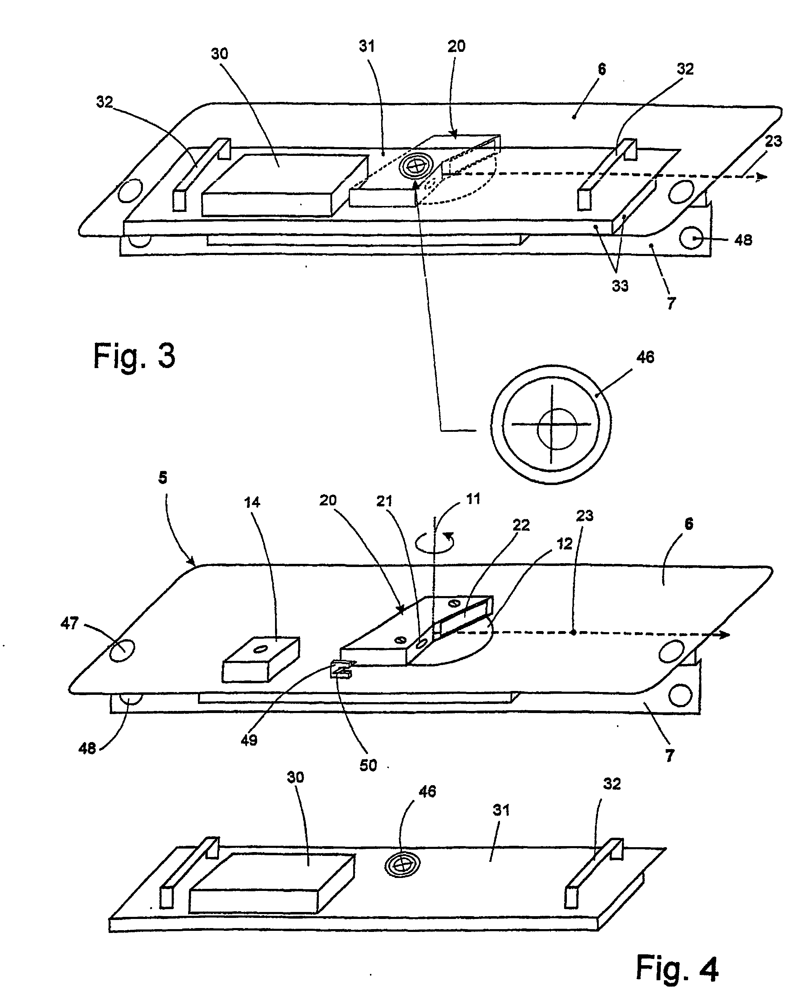

Eine zu sanierende Treppe ist in Fig. 1 und 2 schematisch dargestellt. Sie enthält eine Mehrzahl von Treppenstufen 1, die aus je einer Trittstufe 2 und einer Setzstufe 3 gebildet sind, deren Oberflächen nachfolgend als Trittstufenflächen bzw. Stoßflächen bezeichnet werden. Die Treppenstufen 1 können als Blockstufen oder, wie Fig. 3 zeigt, als Winkelstufen ausgebildet und dazu mit über die Setzstufen 3 nach vorn vorstehenden Trittkanten 4 versehen sein.

Die erfindungsgemäße Vorrichtung enthält ein Grundgestell 5 mit einem zum Auflegen auf eine Trittstufenfläche bestimmten, hier als Grundplatte 6 ausgebildeten Auflageelement und einem im wesentlichen senkrecht dazu angeordneten, zum Anlegen an eine Stoßfläche bestimmten, hier ebenfalls als Platte ausgebildeten Anschlagelement 7. Das Anschlagelement 7 ist bei der Anwendung auf Winkelstufen nach Fig. 2 mit einer nach vorn abgewinkelten Schulter 8 versehen, die einen Freiraum 9 bildet. Wird daher die Grundplatte 6 entsprechend Fig. 2 von vorn auf die Trittstufe 2 irgendeiner Treppenstufe 1 aufgelegt und dann vorgeschoben, bis das Anschlagelement 7 an der Stoßfläche der Setzstufe 3 derselben Treppenstufe 1 anliegt, dann wird die vorstehende Trittkante 4 der jeweiligen Treppenstufe 1 von dem Freiraum 9 aufgenommen.

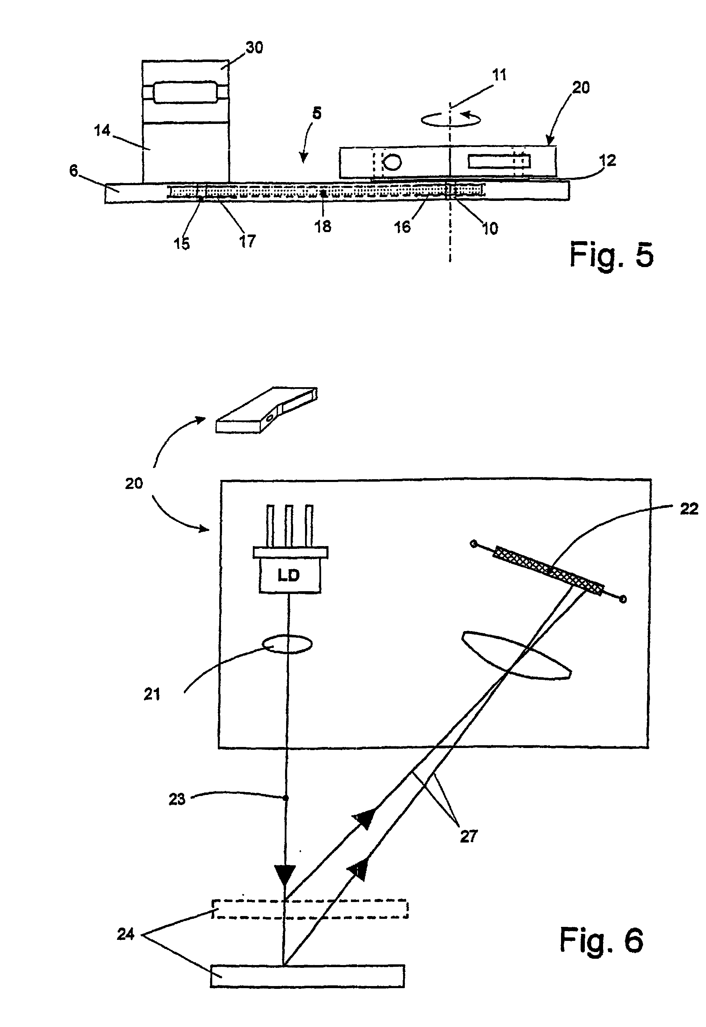

In der Grundplatte 6 ist gemäß Fig. 5 eine Welle 10 drehbar gelagert, deren Drehachse senkrecht zur Grundplatte 6 steht. Auf dieser Welle 10 ist ein oberhalb der Grundplatte 6 angeordneter und damit ebenfalls um die Drehachse 11 drehbarer Drehteller 12 befestigt. Weiter ist auf der Oberseite der Grundplatte 6 ein Motor 14 montiert, dessen die Grundplatte 6 durchragende Antriebswelle 15 mit der Welle 10 des Drehtellers 12 in Wirkverbindung steht. Dazu sind auf den Wellen 10 und 15 beispielsweise Riemenscheiben 16,17 befestigt, die durch einen Antriebsriemen 18 miteinander verbunden sind.

Wie Fig. 1 bis 4 schematisch zeigen, wird auf dem Drehteller 12 ein Lasermeßgerät 20 angeordnet, das eine asphärische Austrittslinse 21 und eine Sensorscheibe 22 enthält, die aus einer Vielzahl von lichtempfindlichen Sensoren, insbesondere Fotodioden od. dgl. besteht. Nach Fig. 6 ist das Lasermeßgerät 20 nach Art eines üblichen Entfernungs-Meßgeräts ausgebildet, das durch die Austrittslinse 21 einen Laserstrahl 23 aussendet, der an irgendeinem Gegenstand 24, hier insbesondere z.B. einer Wand 25 oder Treppenwange 26 (Fig. 1) reflektiert wird. Ein reflektiertes Teilbündel 27 des Laserstrahls 23 trifft auf die Sensorscheibe 22 und ermöglicht dadurch die genaue Ermittlung des Abstands zwischen der Austrittslinse 21 und dem Gegenstand 24.

Ein übliches Lasermeßgerät 20 zur Messung von Entfernungen arbeitet z.B. nach dem Impulslaufzeit-Verfahren, bei dem die zu messende Entfernung aus dem zeitlichen Abstand eines abgegebenen und eines reflektierten Impulszuges ermittelt wird. Für die Zwecke der Erfindung hat sich beispielsweise ein von der Firma Erwin Sick GmbH, 79761 Waldkirch, unter der Bezeichnung DME 2000 vertriebenes Entfernungs-Meßgerät als geeignet erwiesen.

Auf der Grundplatte 6 ist schließlich noch eine Steuereinheit 30 montiert, die vorzugsweise alle zum Betrieb der Gesamtvorrichtung benötigten Schalter, Anzeigelampen, elektrische Einrichtungen und sonstige Hardware usw. aufweist und nach Fig. 5 in einem Gehäuse untergebracht ist, das auch den Motor 14 und ggf. ein zwischen diesem und der Antriebswelle 15 angeordnetes Untersetzungsgetriebe aufnimmt. Alternativ könnte die Steuereinheit 30 entsprechend Fig. 1, 3 und 4 auf einer Abdeckung 31 befestigt sein, die z.B. zwei Traggriffe 32 aufweist und auf der Oberseite der Grundplatte 6 mittels nicht dargestellter Schrauben od. dgl. befestigt wird. Die Abdeckung 31 weist vorzugsweise einen nach unten ragenden Rand 33 auf, der an der Vorderseite die zwischen der Abdeckung 31 und der Grundplatte 6 zu liegen kommenden Teile abdeckt, an der Rückseite und teilweise auch an den Seiten dagegen unterbrochen ist, um den Austritt des Laserstrahls 23, der in Fig. 3 und 4 durch eine punktiert bzw. gestrichelt dargestellte Linie angedeutet ist, nicht zu behindern.

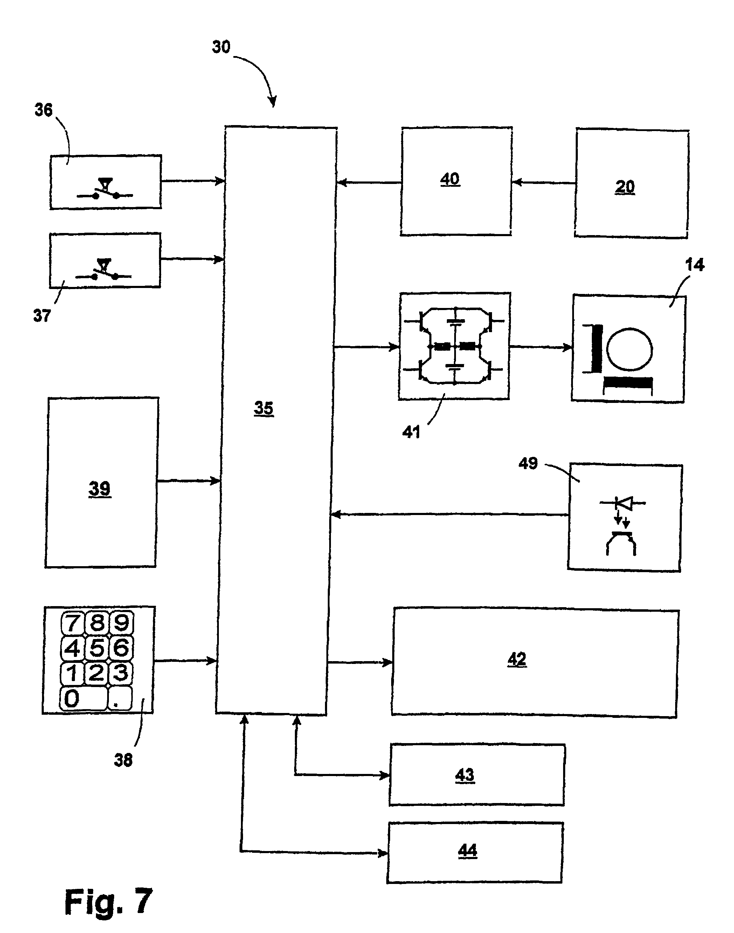

Fig. 7 zeigt schematisch Einzelheiten der Steuereinheit 30. Sie enthält als Hauptbestandteil einen üblichen Mikroprozessor 35, dem eine Starttaste 36 und eine Rücksetztaste 37 zugeordnet sind. Außerdem sind an den Mikroprozessor 35 eine Tastatur 38 und ein beispielsweise als EPROM ausgebildeter, programmierbarer oder programmierter Baustein 39 angeschlossen, in dem das im Einzelfall gewünschte Ablaufprogramm für die erfindungsgemäße Vorrichtung gespeichert ist. Weiter ist zwischen das schematisch dargestellte Lasermeßgerät 20 und den Mikrprozessor 35 ein beispielsweise als RAM ausgebildeter Datenspeicher 40 geschaltet, mit dem die vom Lasermeßgerät 20 ermittelten Meß- bzw. Entfernungsdaten automatisch erfaßt und gespeichert werden können. Diese Meßdaten hängen dabei natürlich von der jeweiligen Drehstellung des Lasermeßgeräts 20 ab, die mit dem Motor 14 hergestellt wird, der über eine Endstufe 41 mit dem Mikroprozessor 35 verbunden ist und unter der Steuerung des Bausteins 39 steht. Mit einem Ausgang des Mikroprozessors 35 ist außerdem ein z.B. auf LCD-Basis aufgebautes Display 42 verbunden, mit dem vorgewählte Informationen wie z.B. der gerade bearbeitete Auftrag, die Kundennummer, die aktuell ermittelte Entfernung usw. angezeigt werden können. Schließlich sind mit dem Mikroprozessor 35 je eine parallele und serielle Schnittstelle 43,44 verbunden, um die Steuereinheit 30 an einen üblichen Rechner, z.B. einen PC, anschließen und/oder die im Speicher 40 befindlichen Meßdaten auf eine Diskette, eine CD od. dgl. überspielen zu können.

Zur Eichung bzw. exakten Positionierung der beschriebenen Vorrichtung weist das Grundgestell 5 wenigstens eine, in Fig. 3 stark vergrößert dargestellte Libelle 46 auf, die z.B. mit der Grundplatte 6 verbunden ist. Weiter ist das Grundgestell 5 zweckmäßig mit drehbar gelagerten Justierschrauben 47,48 oder anderen für zweckmäßig gehaltenen Positioniermitteln versehen. Schließlich ist im Grundgestell 5 ein Sensor 49 (Fig. 4) zur Herstellung einer Nullposition des Lasermeßgeräts 20 untergebracht. Im Ausführungsbeispiel besteht dieser Sensor 49 aus einer Lichtschranke mit zwei U-förmig angeordneten, je einen Lichtquelle und eine lichtempfindliche Diode aufweisenden Armen. Diesem Sensor 49 ist eine am Lasermeßgerät 20 angebrachte Justierfahne 50 aus einem undurchsichtigen Material zugeordnet, die zwischen die beiden Arme der Lichtschranke eingeführt werden kann. Dadurch ist es möglich, den Motor 14 z.B. so zu steuern, daß er und damit auch der Drehteller 12 und das Lasermeßgerät 20 genau dann angehalten werden, wenn die Justierfahne 50 gerade den Wirkungsbereich des Sensors 49 verläßt. Diese Position wird in der weiter unten erläuterten Weise als Nullposition des Lasermeßgeräts 20 definiert. Der Sensor 49 ist im übrigen gemäß Fig. 7 ebenfalls an den Mikroprozessor 35 angeschlossen.

Die Vermessung einer Treppe unter Anwendung der beschriebenen Vorrichtung kann auf die folgende Weise vorgenommen werden:

Die Vorrichtung wird zunächst in der aus Fig. 1 und 2 ersichtlichen Weise auf die erste auszumessende Treppenstufe 1 aufgelegt, indem die Grundplatte 6 auf die Trittfläche der zugehörigen Trittstufe 2 aufgelegt und dann so weit verschoben wird, bis das Anschlagelement 7 gegen die Stoßfläche der zugehörigen Setzstufe 3 stößt. Bei intakter Setzstufe 3 liegt das Anschlagelement 7 jetzt genau vertikal und die Grundplatte 6 genau horizontal. Gleichzeitig schneidet die Drehachse 11 (Fig. 5) die gedachte Vorderkante der neu anzubringenden Trittstufe senkrecht. Dabei ist gleichgültig, ob diese Kante mit der alten, durch Abnutzung nicht mehr vorhandenen Vorderkante übereinstimmt oder nicht, da durch die Sanierungsaufgabe festgelegt ist, welchen Abstand die Vorderkante der neu zu montierenden Trittstufe von der Stoßfläche der noch vorhandenen Setzstufe 3 haben soll. Dieser Abstand ist durch die Lage des Lasermeßgeräts 20 bzw. dessen Drehachse 11 im Grundgestell 5 eindeutig festgelegt. Ist die alte Setzstufe 3 schadhaft oder nicht mehr vorhanden, muß der dadurch entstandene Raum ggf. vor dem Positionieren der Vorrichtung mit einem geeigneten Material verfüllt bzw. hinterlegt werden. Abgesehen davon kann mit Hilfe der Justierschrauben 47,48 sichergestellt werden, daß das Anschlagelement 7 und die Grundplatte 6 die richtigen Positionen einnehmen, und mit Hilfe der Libelle 46 kann die Grundplatte 6 horizontal ausgerichtet werden.

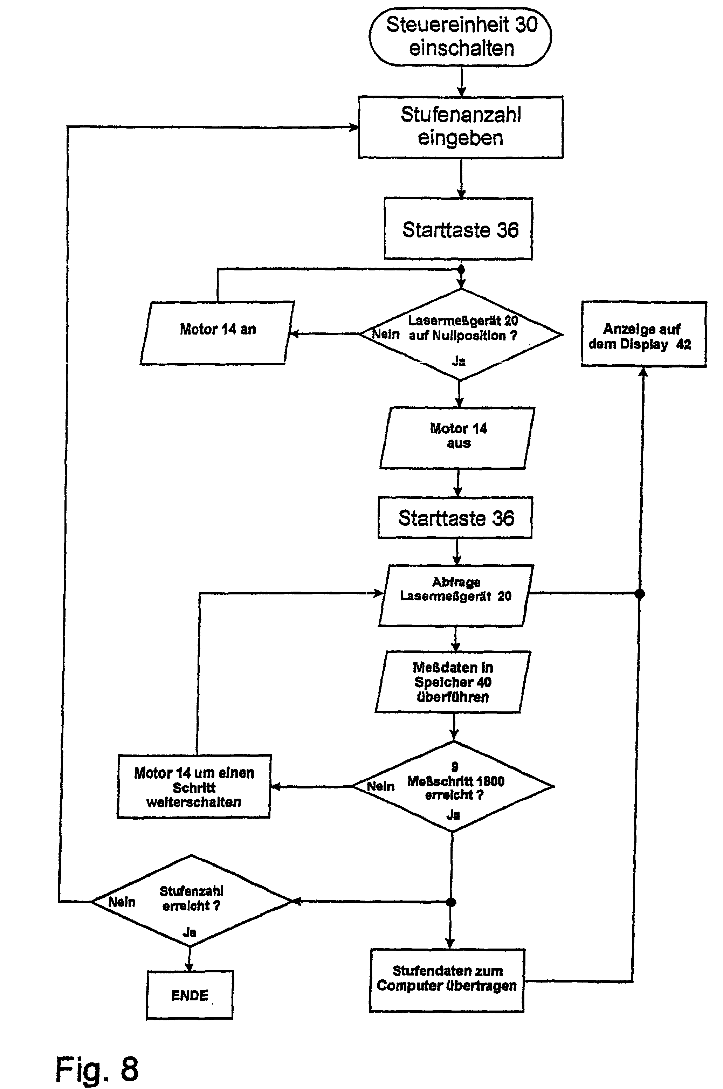

Nachdem das Grundgestell 5 auf diese Weise positioniert worden ist, wird die Steuereinheit 30 mittels eines nicht dargestellten Ein/Aus-Schalters eingeschaltet. Dadurch wird der Mikroprozessor 35 automatisch auf den Programmstart (Fig. 8) gerichtet. Danach kann mittels der Tastatur 38 (Fig. 7) die Zahl der zu vermessenden Stufen und bei Bedarf die Zahl der Meßschritte eingegeben werden. Die Zahl der Meßschritte beträgt im Ausführungsbeispiel 1800, d.h. das Lasermeßgerät 20 wird vom Motor 14 bei der Vermessung jeder Stufe um 1.800 Schritte gedreht. Durch eine Betätigung der Starttaste 36 (Fig. 7) wird nun die Motorsteuerung in Gang gesetzt. Hierdurch wird der Motor 14 automatisch so lange vor- bzw. rückwärts gedreht, bis der Sensor 49 (Fig. 4,7) ein Signal abgibt, das eine vorgewählte Nullposition des Lasermeßgeräts 20 bestätigt. Das ist im gewählten Beispiel diejenige Position, in welcher der vom Lasermeßgerät 20 ausgesandte Laserstrahl 23 (Fig. 6) parallel zur gedachten Vorderkante der zu vermessenden Trittstufe 2 steht. Das Erreichen dieser Nullposition kann z.B. auf dem Display 42 (Fig. 7) zur Anzeige gebracht werden.

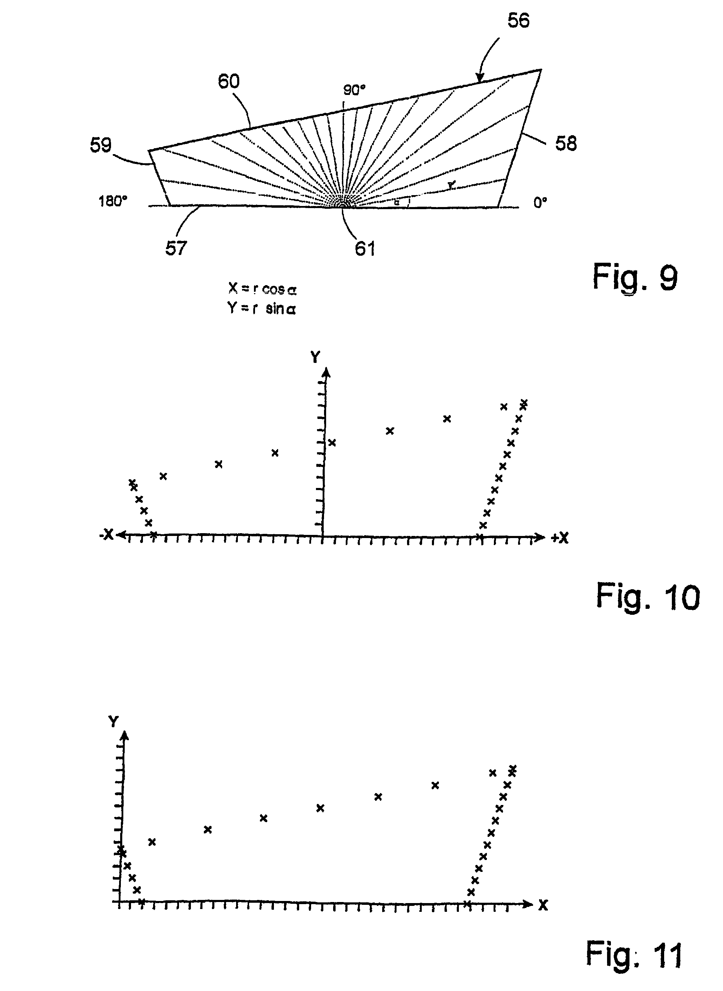

Durch erneutes Betätigen der Starttaste 36 wird nun der eigentliche Meßvorgang in Gang gesetzt, der insbesondere aus der weiter unten erläuterten Fig. 9 ersichtlich ist. In einem ersten Schritt bedeutet das, daß das Lasermeßgerät 20 den Abstand von der seitlichen Begrenzung der Treppenstufe, hier z.B. einer Treppenwange 26 (Fig. 1) mißt. Ist eine solche Treppenwange 26 bei der zu vermessenden Treppe nicht vorhanden, muß sie durch Anlegen eines Bretts od. dgl. am seitlichen Ende der Treppenstufe simuliert werden, um eine Fläche zu schaffen, die den Laserstrahl 23 reflektiert. Der vom Lasermeßgerät 20 ermittelte Meßwert wird sodann in den Speicher 40 überführt und dort gesichert. Anschließend wird geprüft (Block 52 in Fig. 8), ob die Zahl der eingegebenen bzw. festgelegten Meßschritte bereits erreicht ist. Ist dies nicht der Fall, wird der Motor 14 um einen Schritt weitergeschaltet, und der dann vom Lasermeßgerät 20 ermittelte Meßwert wiederum gespeichert. Diese Schritte werden wiederholt, bis alle festgelegten, hier 1800 Meßschritte durchgeführt und die zugehörigen Meßdaten im Speicher 40 abgelegt sind.

Wie durch einen Block 53 in Fig. 8 angedeutet ist, können nun die im Speicher 40 gespeicherten Daten z.B. automatisch an einen Rechner überführt oder auf einer Diskette od. dgl. gespeichert werden. Gleichzeitig wird in einem Block 54 überprüft, ob die Zahl der eingegebenen Stufen erreicht ist. Ist dies nicht der Fall, kehrt das Programm zur ersten Starttastenbetätigung zurück. Abgesehen davon können die erhaltenen Meßdaten jederzeit am Display 42 ausgegeben werden.

Die Vorrichtung wird nun auf der nächsten Treppenstufe angeordnet und entsprechend der obigen Beschreibung positioniert und ausgerichtet. Durch erneutes Betätigen der Starttaste 36 wird dann wiederum die Nullposition des Lasermeßgeräts 20 hergestellt, und nach erneutem Betätigen der Starttaste 36 läuft das Programm in der bereits beschriebenen Weise ab, bis auch die zweite Treppenstufe vermessen ist. Diese Vorgänge werden so oft wiederholt, bis alle Stufen vermessen sind und das Programm durch den Block 54 beendet wird. Dabei versteht sich, daß der Block 53 auch so ausgeführt sein kann, daß die Meßdaten für alle Stufen zunächst im Speicher 40 abgelegt und erst dann zu einem Rechner, einer Diskette od. dgl. überführt werden, wenn alle Stufen vermessen sind. Mit Hilfe der Reset-Taste 37 (Fig. 7) kann der Programmablauf außerdem jederzeit unterbrochen und neu begonnen werden.

Die schrittweise Vermessung einer (alten) Trittstufenfläche 56 mit Hilfe der beschriebenen Vorrichtung ist schematisch in Fig. 9 bis 11 dargestellt. Die Trittstufenfläche 56 hat hier eine gedachte vordere, durch eine Begrenzungslinie 57 definierte Trittkante, deren Lage genau der Lage der vorderen Trittkante der neu zu verlegenden Trittstufe entspricht. Seitlich ist die Trittstufenfläche 56 z.B. durch je eine Treppenwange und eine Wand begrenzt, die durch Begrenzungslinien 58,59 angedeutet sind. Schließlich ist die Trittstufenfläche 56 in Fig. 9 nach hinten durch eine Stoßfläche begrenzt, die von der Setzstufe der nächsten Treppenstufe gebildet wird. Diese Stoßfläche ist durch eine Begrenzungslinie 60 angegeben und deutet z.B. an, daß es sich im Ausführungsbeispiel nicht um eine gerade Treppe, sondern um eine solche mit einem bogen- oder winkelförmigen Verlauf handelt.

Das Lasermeßgerät 20 ist bei Anwendung der beschriebenen Vorrichtung z.B. auf der Linie 57 in einer durch das Bezugszeichen 61 angedeuteten Position angeordnet. Die Linie 57 entspricht dabei einer gedachten Nullinie, in die der Laserstrahl 23 weist, nachdem das Lasermeßgerät 20 in der oben beschriebenen Weise mittels des Sensors 49 in die Nullposition gebracht worden ist (Winkel 0° in Fig. 9). Ausgehend davon wird das Lasermeßgerät 20 schrittweise um einen Winkel α weitergedreht, so daß es zunächst alle Entfernungen zur Linie 58 (z.B. einer Treppenwange), dann alle Entfernungen bis zur Linie 60 (z.B. einer Setzstufe) und dann bis zur Linie 59 (z.B. einer Wand) mißt. Nach einer Drehung um 180° ist die Meßreihe beendet, wobei diese Drehung z.B. in 1800 Schritte von jeweils ca. 0,1° eingeteilt wird. Eine Vermessung der Vorderkante der Trittstufenfläche 56 ist hierbei nicht erforderlich, da diese Vorderkante als Grundlinie der Messung verwendet wird.

Wie Fig. 10 zeigt, können die gemessenen Entfernungen r mit Hilfe des zugehörigen Gesamtwinkels α nach den Fonneln x = r·cosα und y = r · sinα in kartesische Koordinaten eines gedachten kartesischen Koordinatensystems mit den Achsen X und Y umgerechnet werden (Fig. 10), dessen Y-Achse dort liegt, wo in Fig. 9 das Lasermeßgerät 20 angeordnet ist (Punkt 61). Alternativ können die erhaltenen Meßdaten entsprechend Fig. 11 in die x- und y-Werte eines kartesischen Koordinatensystems transformiert werden, bei dem alle Entfernungswerte im ersten Quadranten liegen und bei dem die Y-Achse z.B. durch den Fußpunkt des in Fig. 9 und 10 äußersten linken Meßpunktes verläuft. Alle diese Umrechnungen können mittels eines Rechners automatisch und in Abhängigkeit davon durchgeführt werden, welche Steuerdaten im Einzelfall benötigt werden. Dabei ist in Weiterbildung der Erfindung vorgesehen, die erhaltenen Daten direkt einer CNC-gesteuerten Maschine zuzuführen, mittels derer eine entsprechend Fig. 9 bis 11 geformte Trittstufe automatisch herstellbar ist. Alternativ wäre es auch möglich, die Daten einem Plotter zuzuführen, der die erhaltenen Daten analog zu Fig. 11 auf ein Blatt druckt, das dann z.B. längs der Linien 57 bis 60 ausgeschnitten werden kann oder in anderer Weise eine Schablone zur Herstellung einer entsprechend geformten Trittstufe bildet. Zusätzlich können natürlich entsprechend der oben erläuterten Verfahrensweise bei der Sanierung von Treppenstufen auch die bisher üblicherweise verwendeten Profile angewendet werden, weil bei diesen der Abstand zwischen dem an die Setzstufe anzulegenden Schenkel und der Trittkante genau dem Abstand entspricht, den in Fig. 3 das Anschlagelement 7 von der Drehachse des Lasermeßgeräts 20 aufweist.

Ein besonderer Vorteil der erfindungsgemäßen Vorrichtung besteht darin, daß das Lasermeßgerät 20 nicht exakt im Mittelpunkt der Linie 57 (Fig. 9) stehen und daher die Vorrichtung in Längsrichtung der Treppe (Fig. 1) nicht exakt positioniert werden muß. Da das Lasermeßgerät 20 entsprechend Fig. 9 sowohl eine Messung in Richtung des Winkels 0° als auch eine Messung in Richtung des Winkels 180° durchführt, kann durch Halbierung der Summe der beiden in diesen Richtungen erhaltenen Entfernungsmessungen bei Bedarf stets genau der Mittelpunkt der Linie 57 ermittelt werden. Auch diese Berechnung kann am einfachsten mittels einer entsprechenden Software automatisch durchgeführt werden, so daß die Vermessung einer Trittstufenfläche bis auf die oben erläuterte Positionierung der Vorrichtung und das ggf. erforderliche Anbringen seitlicher Reflektionsflächen vollautomatisch und daher sehr viel schneller als manuell mit Hilfe eines Meßstabs od. dgl. erfolgen kann. Da bei der Herstellung der neuen Trittstufen außerdem mit Toleranzen von einigen Millimetern gearbeitet werden kann, brauchen auch die Messungen mit keiner höheren Genauigkeit durchgeführt werden, was die Vermessungsarbeit weiter erleichtert. Außerdem können die Meßdaten vollautomatisch in Daten umgewandelt werden, die von der Herstellung der Trittstufen geeigneten Automaten lesbar sind. Dies ermöglicht es, der mit der Sanierung einer Treppe beauftragten Firma, die Treppe zu vermessen und die Meßdaten dann mittels einer Diskette an die die Trittstufen herstellende Firma zu übermitteln.

Die Erfindung ist nicht auf das beschriebene Ausführungsbeispiel beschränkt, das auf vielfache Weise abgewandelt werden kann. Insbesondere wäre es z.B. möglich, das Anschlagelement 7 einstellbar am Grundgestell 5 zu befestigen, damit es beispielsweise auf unterschiedliche Arten von Treppenstufen, z.B. Blockstufen anstatt Winkelstufen, relativ zur Drehachse 11 eingestellt werden kann. Außerdem können andere als die dargestellten Mittel zur Positionierung und Justierung der verschiedenen Bauteile vorgesehen werden. Möglich wäre ferner, das Lasermeßgerät 20 nicht exakt auf einer der Vorderkante der Treppenstufe entsprechenden Achse (Linie 57 in Fig. 9), sondern auf einer dazu parallelen Linie anzuordnen, in welchem Fall es je nach Anordnung um mehr oder weniger als 180° gedreht werden müßte, um alle Abstände von den Linien 58, 59 und 60 in Fig. 9 zu ermitteln. Auch in diesem Fall könnte mittels einer entsprechenden Software eine Umrechnung der Meßdaten in Werte erfolgen, die zu den aus Fig. 10 und 11 ersichtlichen Daten führen. Entsprechend könnte für den Fall, daß der Ausgangspunkt des Laserstrahls nicht genau in der Drehachse 11 liegt, der dadurch erhaltene Meßfehler automatisch über die Software korrigiert werden. Weiter kann anstelle des beschriebenen Programmablaufs ein anderer Programmablauf gewählt, anstelle eines Schrittmotors od. dgl. ein anderes Mittel zum schrittweisen Drehen des Lasermeßgeräts 20 verwendet und statt eines Riemenantriebs ein Zahnradgetriebe od. dgl. vorgesehen werden. Außerdem kann die erfindungsgemäße Vorrichtung auch zur Vermessung von anderen Treppenflächen, beispielsweise der Oberfläche von Treppen-Podesten angewendet werden. Schließlich versteht sich, daß die verschiedenen Merkmale der erfindungsgemäßen Vorrichtung auch in anderen als den dargestellten und beschriebenen Kombinationen angewendet werden können.

## Patentansprüche

1. Vorrichtung zum Vermessen von Treppenflächen, **gekennzeichnet durch** ein Grundgestell (5) mit einem zum Anlegen an eine Setzstufe (3) bestimmten Anschlagelement (7) und einem zum Auflegen auf eine Treppenfläche (2) bestimmten Auflageelement (6), ein am Grundgestell (5) montiertes Lasermeßgerät (20), das um eine Drehachse (11) drehbar gelagert ist, die senkrecht zu einer vom Auflageelement (6) gebildeten Auflagefläche und mit einem vorgewählten Abstand vom Anschlagelement (7) angeordnet ist, Mittel zum Drehen des Lasermeßgeräts (20) um die Drehachse (11) und Mittel zur automatischen Erfassung und Speicherung der vom Lasermeßgerät (20) ermittelten Meßdaten in Abhängigkeit von seiner jeweiligen Drehstellung.

2. Vorrichtung nach Anspruch 1, **dadurch gekennzeichnet, daß** das Mittel zum Drehen des Lasermeßgeräts (20) aus einem Motor (14) besteht.

3. Vorrichtung nach Anspruch 2, **dadurch gekennzeichnet, daß** das Lasermeßgerät (20) auf einer drehbar im Grundgestell (5) gelagerten Welle (10) montiert ist und der Motor (14) eine mit der Welle (10) in Wirkverbindung stehende Antriebswelle (15) aufweist.

4. Vorrichtung nach einem der Ansprüche 1 bis 3, **gekennzeichnet durch** einen am Grundgestell (5) montierten Sensor (49) zur Herstellung einer Nullposition des Lasermeßgeräts (20).

5. Vorrichtung nach einem der Ansprüche 1 bis 4, **dadurch gekennzeichnet, daß** das Grundgestell (5) mit wenigstens einer Libelle (46) versehen ist.

6. Vorrichtung nach einem der Ansprüche 2 bis 5, **dadurch gekennzeichnet, daß** am Grundgestell (5) eine Steuereinheit (30) für den Motor (14) vorgesehen ist, die alle zur schrittweisen Drehung des Lasermeßgeräts (20) um insgesamt wenigstens 180° sowie zur Ablaufsteuerung erforderlichen Mittel enthält.

7. Vorrichtung nach einem der Ansprüche 1 bis 6, **dadurch gekennzeichnet, daß** das Grundgestell (5) mit Mitteln (48) zur Positionierung des Anschlagelements (7) relativ zur Setzstufe (3) einer zu vermessenden Treppe versehen ist.

## Claims

1. Device for measuring stair-tread surfaces, **characterised by** a base stand (5), having a limit stop element (7), which is intended to be placed against a riser (3), and a support element (6), which is intended to be placed on a stair-tread surface (2), a laser measuring device (20) which is mounted on the base stand (5) and is mounted rotatably about an axis of rotation (11), said axis of rotation being disposed perpendicularly to a support surface which is formed by the support element (6) and having a pre-selected spacing from the limit stop element (7), means for rotation of the laser measuring device (20) about the axis of rotation (11) and means for the automatic detection and storage of the measuring data determined by the laser measuring device (20) as a function of its respective rotational position.

2. Device according to claim 1, **characterised in that** the means for rotation of the laser measuring device (20) comprise a motor (14).

3. Device according to claim 2, **characterised in that** the laser measuring device (20) is mounted on a shaft (10) which is rotatably mounted in the base stand (5) and the motor (14) has a drive shaft (15) which cooperates with the shaft (10).

4. Device according to one of the claims 1 to 3, **characterised by** a sensor (49) for producing a zero position of the laser measuring device (20), which sensor is mounted on the base stand (5).

5. Device according to one of the claims 1 to 4, **characterised in that** the base stand (5) is provided with at least one spirit level (46).

6. Device according to one of the claims 2 to 5, **characterised in that** a control unit (30) for the motor (14) is provided on the base stand (5), which unit contains all the means which are required for the step-wise rotation of the laser measuring device (20) by in total at least 180° and also for control of the course.

7. Device according to one of the claims 1 to 6, **characterised in that** the base stand (5) is provided with means (48) for positioning of the limit stop element (7) relative to the riser (3) of a stair tread which is to be measured.

## Revendications

1. Dispositif pour mesurer des marches d'escalier, **caractérisé par** un bâti (5) présentant un élément formant butée (7) destiné à venir en appui sur une contre-marche (3) et un élément à poser (6) destiné à venir se poser sur une marche d'escalier (2), un appareil de mesure au laser (20) monté sur le bâti (5), lequel appareil est supporté en rotation autour d'un axe de rotation (11) qui est disposé perpendiculairement à une surface d'appui formée par l'élément à poser (6) et à une distance choisie de l'élément formant butée (7), des moyens pour animer en rotation l'appareil de mesure au laser (20) autour de l'axe de rotation (11) et des moyens pour détecter et mémoriser automatiquement les données relevées par l'appareil de mesure au laser (20) en fonction de sa position de rotation considérée.

2. Dispositif selon la revendication 1, **caractérisé en ce que** le moyen animant en rotation l'appareil de mesure au laser (20) est constitué d'un moteur (14).

3. Dispositif selon la revendication 2, **caractérisé en ce que** l'appareil de mesure au laser (20) est monté sur un arbre (10) supporté en rotation dans le bâti (5) et le moteur (14) présente un arbre d'entraînement (15) en liaison de coopération avec l'arbre (10).

4. Dispositif selon l'une des revendications 1 à 3, **caractérisé par** un capteur (49) monté sur le bâti (5) pour établir une position zéro de l'appareil de mesure au laser (20).

5. Dispositif selon l'une des revendications 1 à 4, **caractérisé en ce que** le bâti (5) est pourvu d'au moins un niveau à bulle (46).

6. Dispositif selon l'une des revendications 2 à 5, **caractérisé en ce que** sur le bâti (5) est prévue pour le moteur (14) une unité de commande (30) qui contient tous les moyens requis pour la rotation pas à pas de l'appareil de mesure au laser (20) autour d'au moins 180° au total ainsi que pour la commande séquentielle.

7. Dispositif selon l'une des revendications 1 à 6, **caractérisé en ce que** le bâti (5) est pourvu de moyens (48) pour positionner l'élément formant butée (7) par rapport à la contre-marche (3) d'une marche d'escalier à mesurer.
